# FASCICULE DE BREVET EUROPEEN

(11) **EP 0 947 943 B1**
(45) Date de publication et mention de la délivrance du brevet: **28.06.2000**
(21) Numéro de dépôt: 98440065.5
(22) Date de dépôt: 01.04.1998
(51) Int. Cl.: G06K 7/00, G06K 13/08

(54) **Dispositif de transfert d'informations**
Datenübertragungsvorrichtung
Data transfer device

(43) Date de publication de la demande: 06.10.1999
(73) Titulaire: SOGICO SA, 2028 Vaumarcus (CH)
(72) Inventeur: Villegas, Marc, 69800 Saint Priest (FR)
(74) Mandataire: Littolff, Denis

(56) Documents cités:
- EP-A- 0 742 529
- WO-A-94/10651
- DE-A- 4 418 327
- FR-A- 2 598 037

## Description

La présente invention concerne un dispositif de transfert d'informations constitué d'un lecteur fonctionnant avec des cartes du type carte de crédit ou avec des clés assurant les mêmes fonctions que les cartes, et permettant notamment la gestion d'une prestation offerte dans le cadre d'une structure intégrant le dispositif de l'invention, par exemple pour autoriser le titulaire de la carte ou de la clé à accéder à la prestation précitée.

L'exemple préférentiel auquel il sera fait référence dans la suite se situe dans le domaine des stations automatisées de lavage de véhicules automobiles dans lesquelles le propriétaire du véhicule rétribue une prestation choisie parmi un nombre plus ou moins important d'options visant à nettoyer ledit véhicule. Ainsi, contre paiement effectué via carte de paiement classique, jetons, pièces de monnaie, etc..., il peut décider de procéder à un lavage complet, à un rinçage ponctuel, à un simple lustrage, etc..., de tout ou partie du véhicule pendant une durée qui dépend du montant initial versé à l'automate de paiement.

Pour s'affranchir des solutions techniques à jetons ou à pièces de monnaie, moins pratiques car elles nécessitent d'en disposer alors que la tendance générale va dans le sens inverse et que l'on s'en trouve par conséquent souvent dépourvu, les développements actuels s'orientent vers les systèmes à cartes ou équivalents.

Ces systèmes nécessitent soit des cartes bancaires, soit des cartes spécifiques fournies par le prestataire, qui peuvent d'ailleurs se présenter sous diverses formes plus ou moins proches du standard traditionnel de la carte.

Ainsi, l'une des formes les plus répandues, symbolisant l'accessibilité à des prestations non gratuites, est celle de la clé. La carte et la clé ont chacune leurs défenseurs, les uns arguant qu'avec le développement des cartes et l'apparition des porte-cartes, le rangement et l'accès à une carte sont aisés et deviennent naturels, alors que les autres pensent qu'une clé, intégrée à un trousseau qu'il faut de toute manière porter sur soi lorsqu'on conduit son véhicule, offre la meilleure garantie d'avoir sur soi les moyens d'accéder à la prestation au moment voulu.

En fait, la forme en clé entraîne simplement un format de volume plus ramassé que celui de la carte, puisqu'il n'y a aucune nécessité d'intégrer une configuration géométriquement complexe en bout de clé, celle-ci n'assurant pas de fonction mécanique de verrouillage. La forme de clé est en réalité symbolique et schématique, et surtout intégrable à un trousseau de clés classique.

Le document FR-A-2598037 dévoile un lecteur qui dans une première réalisation est apte à lire un support du type carte et qui dans une deuxième réalisation est apte à lire un support du type clé.

L'objet de l'invention est de permettre l'utilisation des deux types précités de formes, en proposant notamment un lecteur pouvant loger alternativement les cartes et les clés sans altérer la qualité du transfert d'informations et avec une mise en oeuvre qui ne change pas par rapport aux lecteurs traditionnels, donc qui n'exige aucune manipulation additionnelle de la part de l'utilisateur.

Plus précisément, l'invention a trait à un dispositif de transfert d'informations selon la revendication 1.

La double possibilité de support d'informations à loger dans le lecteur se traduit concrètement par l'existence d'un orifice d'insertion en forme de T dont la barre supérieure correspond à la zone d'insertion de la carte alors que la zone centrale d'allure verticale correspond à l'espace d'insertion de la clé.

De préférence, le volume complexe a une section transversale sensiblement en forme de T, la paroi supérieure comportant au moins une patte élastique présentant par rapport à ladite paroi supérieure un angle tel que son extrémité libre pénètre dans ledit volume complexe.

La configuration spatiale ainsi posée permet de loger en partie haute une carte classique, alors que la partie basse plus étroite autorise l'accès et le logement du volume plus ramassé constitué par la portion allongée de la clé. Celle-ci déborde en fait dans l'espace alloué à la carte, de sorte que les mêmes moyens élastiques de maintien puissent servir dans les deux cas, comme on le verra ci-après.

Bien que l'extrémité libre de la ou des patte(s) soit en réalité comprise uniquement dans le volume supérieur alloué à la carte, ladite patte permet, notamment du fait de son inclinaison, le maintien direct ou indirect non seulement de la carte mais également de la clé. On peut d'ailleurs considérer que cette inclinaison réalise une précontrainte de la force de rappel des moyens élastiques.

Selon une configuration possible, la ou lesdites patte(s) est/sont dotée(s) de reliefs orientés vers l'intérieur dudit volume complexe.

Ces reliefs renforcent et améliorent l'effet de maintien exercé sur les supports d'information constitués de la carte et de la clé.

De préférence, le volume complexe ne présente qu'une patte élastique supérieure centrée dans la paroi supérieure, orientée longitudinalement par rapport à la direction d'insertion de la clé/carte, et dont l'extrémité libre est située à l'opposé de l'orifice d'insertion.

Ceci aboutit à réduire, dans la zone centrale, le volume utile que pourrait utiliser la carte, la contrepartie étant l'incidence évidente de cette configuration sur les efforts exercés par les moyens de maintien.

Selon une configuration particulièrement bien adaptée au problème du double maintien des supports d'informations, la patte élastique supérieure comporte au moins un bossage à section triangulaire orienté transversalement par rapport à la patte, et dont le sommet est arrondi.

Ce ou ces bossage(s) constitue(nt) les reliefs précités, utilisés pour amplifier l'effet élastique, et surtout pour l'appliquer de façon plus précise à la carte ou à la clé.

De préférence, la patte comporte même trois bossages triangulaires, le plus proche de l'orifice d'insertion occupant la totalité de la largeur de la patte élastique supérieure, les deux autres étant localisés sur le même axe transversal symétriquement de part et d'autre de l'axe longitudinal central de ladite patte élastique supérieure.

Pour des raisons d'accessibilité et de guidage, la paroi inférieure du volume complexe comporte deux rampes latérales parallèles à la paroi inférieure du volume alloué à la carte, destinées à supporter/guider la clé, et munies d'un épaulement terminal situé à distance dudit orifice d'insertion et faisant office de butée mécanique pour la clé.

Les deux espaces formant le volume complexe comportent au surplus un chanfrein élargissant leur ouverture au niveau de l'orifice d'insertion, celui qui équipe l'espace inférieur réservé à la clé étant même dimensionné de manière à offrir une large embouchure vers l'extérieur.

Cet élargissement améliore encore le confort d'utilisation car d'une part il permet un guidage/centrage au début de l'insertion, et d'autre part il facilite l'extraction de la carte ou de la clé à l'issue de l'opération.

Toujours selon l'invention, la base du volume inférieur du volume complexe est en pente, ladite pente s'achevant en une paroi verticale située à proximité de l'extrémité libre de la patte élastique supérieure, faisant office de butée mécanique pour la carte, laquelle se trouve alors en position de transfert d'informations et subissant une pression exercée par les bossages triangulaires.

La configuration du lecteur développée ci-dessus lui permet de loger toutes les cartes de format standard, et toutes les formes de clés dont le volume de la partie allongée peut s'adapter au volume interne inférieur précité.

Dans l'invention, la clé s'insère donc dans cette zone centrale d'allure verticale, sur les rampes latérales et au contact des parois latérales surmontant lesdites rampes, le guidage supérieur étant assuré par le bossage triangulaire le plus proche de l'orifice d'insertion.

Pour améliorer encore le maintien en position, réalisé par la partie supérieure élastique et ses reliefs externes, ladite clé comporte au moins un relief en creux s'adaptant audit bossage triangulaire lorsqu'elle en butée dans son logement.

En outre, cette clé présente de préférence un plan de symétrie, au moins dans sa portion prévue pour être logée dans le lecteur, tel qu'il permet de confondre son recto et son verso.

L'utilisateur voit sa tâche encore facilitée par cette configuration particulière qui améliore la simplicité d'utilisation du système.

Enfin, selon l'invention, le lecteur comporte sur sa face opposée à celle qui présente l'orifice d'insertion de la carte/clé, au moins un logement pour l'installation d'une antenne de transmission des données entre la carte/clé et une unité centrale électronique de traitement.

Seule une antenne permettant l'échange de données, par exemple stockées dans une mémoire magnétique intégrée à la carte ou à la clé, est par conséquent disposée dans ou au niveau du lecteur. Le reste de l'unité de traitement électronique est placé à quelque distance, de sorte que si ledit lecteur est endommagé (par exemple suite à un acte de vandalisme), le coeur du système n'est pas affecté.

La présente invention concerne ensuite plus particulièrement une application du dispositif de transfert de l'invention à des stations automatisées, notamment de lavage de véhicules automobiles, pour autoriser le titulaire de la carte/clé à procéder au nettoyage de son véhicule, et/ou au contrôle de la pression des pneus, et/ou au chargement d'unités de crédit sur sa carte/clé, et/ou au paramétrage du fonctionnement d'au moins une station.

Toutefois, le dispositif en tant que tel peut bien entendu être appliqué à d'autres ensembles ou structures qui doivent disposer des fonctions qu'il offre.

L'invention va à présent être décrite de manière plus détaillée, notamment en référence aux figures annexées, pour lesquelles :
- la figure 1 est une vue en perspective d'un lecteur selon la présente invention ;
- la figure 2 représente une vue en élévation de face dudit lecteur ;
- la figure 3 en est une vue arrière ;
- la figure 4 une vue de côté du même lecteur ;
- la figure 5 en est une coupe selon les flèches V-V représentées en figure 2, dans la direction des flèches ;
- la figure 6 est une coupe selon les flèches VI-VI représentées en figure 2, dans la direction des flèches ;
- la figure 7 représente une vue de côté d'une clé à insérer dans le lecteur précédent ;
- la figure 8 en montre une vue de face ; et
- la figure 9 montre une coupe longitudinale de ladite clé.

Le dispositif représenté dans les figures annexées ne constitue qu'un exemple non limitatif de l'invention. Les références utilisées désignent les mêmes éléments d'une figure à l'autre.

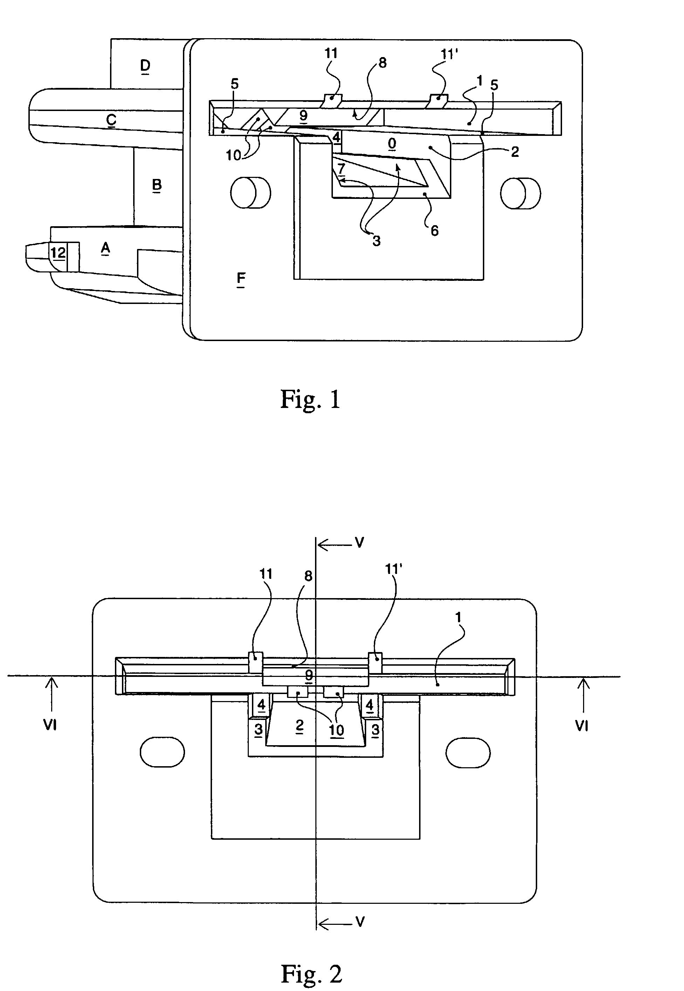

En figure 1, le lecteur comporte une façade (F) percée d'un unique orifice (O) ayant une allure générale en T, et par conséquent composé d'une partie supérieure d'allure horizontale (1) et d'une partie centrale inférieure (2) d'allure verticale.

Derrière la façade (F), un ensemble de volumes superposés (A, B, C, D) constituent le corps du lecteur, et peuvent notamment coopérer à la fixation du lecteur dans un panneau accessible à l'utilisateur. Les autres éléments visibles en figure 1 seront décrits en combinaison avec les figures suivantes, dans lesquelles leur fonction apparaît plus clairement.

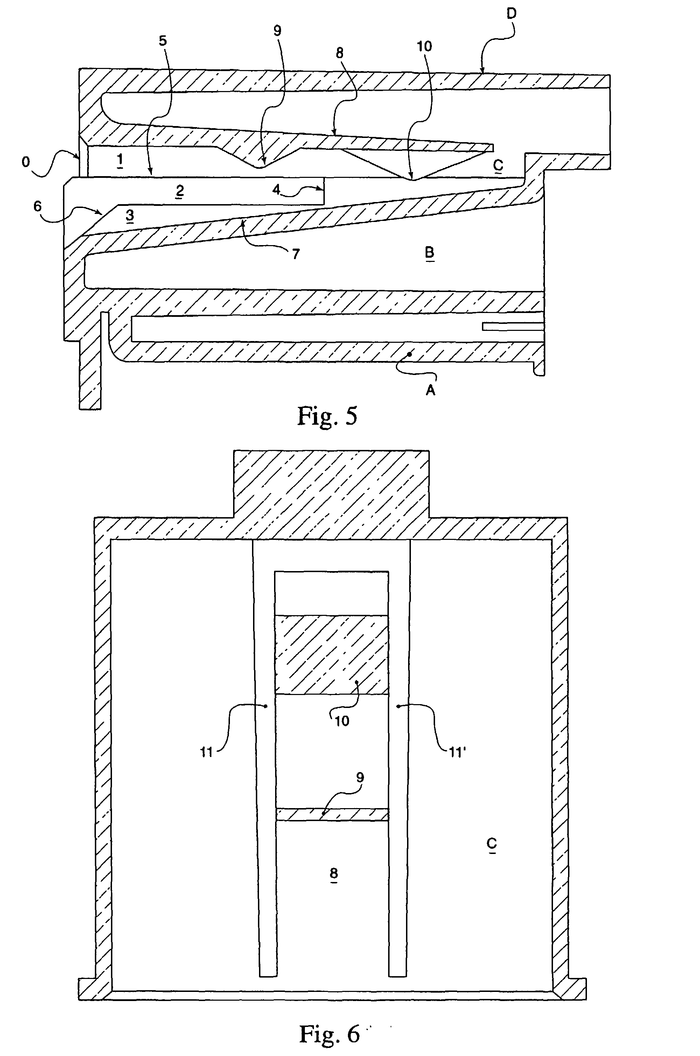

Ainsi, la figure 5 montre particulièrement bien la délimitation entre le volume supérieur (1) logeant la carte et le volume inférieur (2) logeant au moins partiellement la clé.

Ce volume inférieur (2) peut lui-même être divisé en deux espaces, un espace utile au-dessus des rampes (3) et un espace résiduel entre lesdites rampes (3). Ces rampes (3) s'achèvent à l'intérieur du logement (2) par un épaulement (4) sur lequel la clé vient en butée en fin d'insertion et au moment du transfert des données. Comme on l'a déjà signalé, la clé dépasse cependant vers le haut au-delà de la surface inférieure (5) du volume (1) de façon à coopérer de manière satisfaisante avec les moyens de maintien (voir ci-après).

Les rampes (3) présentent, au niveau de l'ouverture d'insertion (O), une pente prononcée (6) s'appliquant également à la surface (7) inclinée les séparant (3).

Le volume supérieur (1) est délimité, dans sa zone centrale haute, par une patte élastique (8) inclinée vers le fond dudit volume (1), et présentant des reliefs sous forme de bossages à section triangulaire (9, 10). Le bossage (9) à proximité de l'orifice (O) s'étend transversalement sur toute la largeur de la patte (8). Le bossage (10) comprend en réalité deux portions identiques disposées symétriquement par rapport à l'axe longitudinal central de ladite patte élastique (8), comme cela apparaît mieux dans les figures 1 et 2.

Cette dernière figure met particulièrement en évidence la configuration aboutissant à la création de la patte élastique (8). Les deux interstices (11, 11') existant de part et d'autre de ladite patte (8) sont en fait obtenus, comme du reste la totalité du lecteur, par moulage.

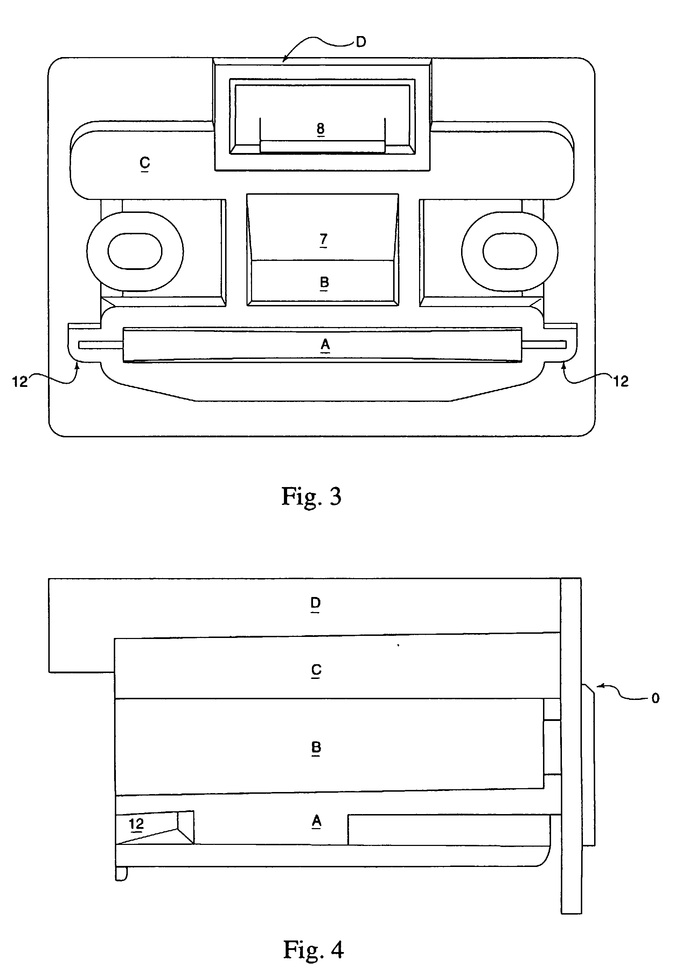

Cette patte (8) constitue une grande partie de la base du volume (D), ainsi que cela apparaît en figure 3 montrant le lecteur en vue arrière. Cette figure montre également que les volumes successifs (A, B, C, D) sont alternativement larges et d'allure plutôt plane pour A et C, et plus étroits, mais plus hauts pour ce qui concerne B et D. La surface inclinée (7) constitue la paroi supérieure du volume (B).

La vue de côté (figure 4) ne permet pas de voir l'agencement interne des éléments, mais elle donne une idée complémentaire de la structure du lecteur, qu'on peut voir comme un tiroir facilement montable et démontable, et par conséquent aisé à changer en cas de dommage. Les ergots latéraux (12) peuvent notamment faciliter la fixation externe dudit tiroir dans son environnement et/ou, via leur interstice interne, la fixation à l'intérieur du volume A d'un élément de type carte électronique, par exemple contenant l'antenne et un connecteur de liaison à l'unité centrale électronique, ou seulement une antenne.

La vue de la figure 6, une coupe vers le haut faite au milieu du volume supérieur (1), a pour objet de préciser la position de la languette ou patte élastique (8) dans le fond du volume (D) ou dans la paroi supérieure du volume (1). Dans ce cas, une variante des moyens de maintien fait état d'un bossage (10) unique, et non pas double comme mentionné auparavant.

Le but de cette figure est également de montrer, via la coupe desdits bossages (9, 10), leur différence d'application sur la carte insérée dans le volume (1), reflétée par la surface de coupe : la patte (8) étant inclinée, le bossage (9) pénètre plus profondément dans le volume supérieur (1), et applique par conséquent une pression supérieure sur ladite carte.

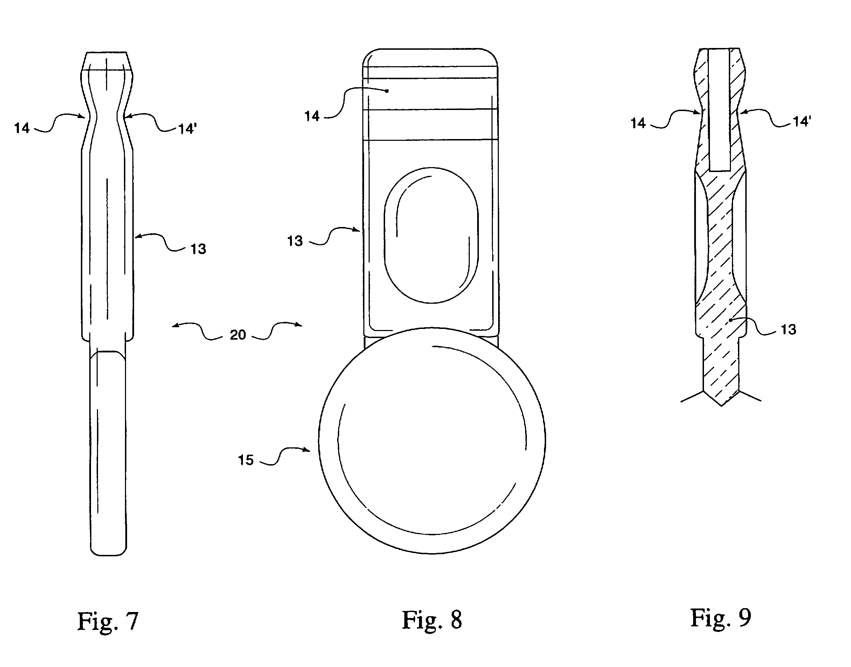

Les figures 7 à 9 illustrent une configuration de clé (20) s'ajustant dans l'orifice central d'allure verticale ouvrant sur le volume inférieur (2), puisque sa partie allongée (13) a une largeur s'adaptant à la largeur disponible sur les rampes (3).

L'épaisseur de ladite partie allongée (13) est telle que la clé (20) n'est pas contenue uniquement dans ledit volume (2), mais dépasse de la surface inférieure (5) du volume (1), comme on l'a déjà mentionné. Elle coopère de ce fait mieux avec le bossage (9) qui s'applique dans cette zone.

En fait, ledit bossage coopère avec un relief en creux (14, 14') équipant l'extrémité de la clé (20). Du fait de l'élasticité de la patte (8), il se produit un clipsage qui peut avoir lieu indifféremment sur les deux faces de la clé (20), cette dernière étant symétrique au moins dans cette partie.

Le relief en creux (14, 14') présente lui-même une symétrie par rapport à un plan perpendiculaire au précédent et passant par son point le plus profond, lui permettant de réagir de manière favorable à l'insertion et à l'extraction, du fait de l'adéquation des reliefs (14, 14') et du bossage (9) et de leurs inclinaisons symétriques en pente douce.

Les manoeuvres d'insertion/extraction sont facilitées par l'élément de préhension (15), auquel on peut donner diverses configurations, au gré du distributeur.

L'extrémité insérable de la clé (20) est enfin chanfreinée, toujours dans le but d'améliorer son introduction. Cette clé (20) et le lecteur décrit auparavant coopèrent donc aussi simplement que l'association lecteur/carte, le maintien des deux supports précités étant réalisé dans des conditions optimales du fait de la conception particulière du lecteur.

La carte est retenue par simple appui des bossages (9, 10), l'extraction comme l'insertion étant réalisées par glissement des sommets arrondis desdits bossages (9, 10) sur la surface de la carte.

Seul le bossage (9) applique un effort sur la clé (20), mais l'existence des creux (14, 14') permet une immobilisation suffisante.

Ces différentes fonctionnalités, obtenues au moyen des formes décrites en référence aux figures peuvent cependant également être mises en oeuvre au moyen de variantes entrant dans le cadre des revendications placées en annexe, dans la mesure où elles font partie du savoir de l'homme de l'art.

## Revendications

1. Dispositif de transfert d'informations relatives à au moins une prestation offerte par une structure dans laquelle est installé ledit dispositif, qui comporte un lecteur prévu pour coopérer avec un porteur d'informations muni de moyens de stockage d'informations concernant lesdites prestations et notamment relatives à un crédit possédé par le titulaire dudit porteur d'informations autorisant le paiement des prestations, **caractérisé en ce que** ledit porteur d'informations et du type carte de crédit ou alternativement du type clé et que le lecteur comporte un unique orifice d'accès (O) permettant l'insertion de la carte/clé (20), ouvrant sur un volume complexe (1, 2) pouvant loger la carte ou la clé (20) et assurant leur guidage lors de l'insertion, des moyens élastiques (8, 9, 10) de maintien de la carte/clé (20) lorsqu'elle est insérée dans le logement (1, 2) en vue du transfert d'informations étant prévus pour assurer une immobilisation relative entre la carte/clé (20) et le lecteur, sans s'opposer à leur extraction manuelle par simple traction.

2. Dispositif de transfert d'informations selon la revendication 1, caractérisé en ce que l'orifice d'insertion (O) est en forme de T dont la barre supérieure correspond à la zone d'insertion de la carte alors que la zone centrale d'allure verticale correspond à l'espace d'insertion de la clé (20).

3. Dispositif de transfert d'informations selon la revendication 2, caractérisé en ce que le volume complexe (1, 2) a une section transversale sensiblement en forme de T, la paroi supérieure comportant au moins une patte élastique (8) présentant par rapport à ladite paroi supérieure un angle tel que son extrémité libre pénètre dans ledit volume complexe (1, 2).

4. Dispositif de transfert d'informations selon la revendication précédente, caractérisé en ce que ladite patte (8) est dotée de reliefs (9, 10) orientés vers l'intérieur dudit volume complexe (1, 2).

5. Dispositif de transfert d'informations selon l'une des revendications 3 et 4, caractérisé en ce que le volume complexe (1, 2) ne présente qu'une patte élastique (8) supérieure centrée dans la paroi supérieure, orientée longitudinalement par rapport à la direction d'insertion de la carte/clé (20), et dont l'extrémité libre est située à l'opposé de l'orifice d'insertion (O).

6. Dispositif de transfert d'informations selon l'une des revendications 3 à 5, caractérisé en ce que la patte élastique (8) supérieure comporte au moins un bossage (9, 10) à section triangulaire orienté transversalement par rapport à la patte (8), et dont le sommet est arrondi.

7. Dispositif de transfert d'informations selon l'une des revendications 5 et 6, caractérisé en ce que ladite patte supérieure (8) comporte trois bossages triangulaires (9, 10), le plus proche de l'orifice d'insertion occupant la totalité de la largeur de la patte élastique (8) supérieure, les deux autres étant localisés sur le même axe transversal symétriquement de part et d'autre de l'axe longitudinal central de ladite patte élastique (8) supérieure.

8. Dispositif de transfert d'informations selon l'une quelconque des revendications 2 à 7, caractérisé en ce que la paroi inférieure (7) du volume complexe (1, 2) comporte deux rampes latérales (3) parallèles à la paroi inférieure (5) du volume (1) alloué à la carte, destinées à supporter/guider la clé (20), et munies d'un épaulement terminal (4) situé à distance dudit orifice d'insertion (O) et faisant office de butée mécanique pour la clé (20).

9. Dispositif de transfert d'informations selon la revendication précédente, caractérisé en ce que la paroi inférieure (7) du volume complexe (1, 2) est en pente, ladite pente s'achevant en une paroi verticale située à proximité de l'extrémité libre de la patte élastique (8) supérieure, faisant office de butée mécanique pour la carte, laquelle se trouve alors en position de transfert d'informations et subissant une pression exercée par les bossages (9, 10) triangulaires.

10. Dispositif de transfert d'informations selon l'une des revendications 8 et 9, caractérisé en ce que la clé (20) s'insère, dans l'espace central (2) d'allure verticale du volume complexe (1, 2), sur les rampes latérales (3) et au contact des parois latérales surmontant lesdites rampes (3), le guidage supérieur étant assuré par le bossage triangulaire (9) le plus proche de l'orifice d'insertion (O).

11. Dispositif de transfert d'informations selon la revendication précédente, caractérisé en ce que la clé (20) comporte au moins un relief en creux (14, 14') s'adaptant audit bossage triangulaire (9) lorsqu'elle est en butée dans son logement (2).

12. Dispositif de transfert d'informations selon la revendication précédente, caractérisé en ce que la clé (20) présente un plan de symétrie, au moins dans sa portion (13) prévue pour être logée dans le lecteur, telle qu'il permet de confondre son recto et son verso.

13. Dispositif de transfert d'informations selon l'une quelconque des revendications précédentes, caractérisé en ce que le lecteur comporte, sur sa face opposée à celle qui présente l'orifice d'insertion de la carte/clé (20), au moins un logement (A) pour l'installation d'une antenne de transmission des données entre la carte/clé (20) et une unité centrale électronique de traitement.

14. Application du dispositif de transfert d'informations selon les revendications précédentes à des stations automatisées notamment de lavage de véhicules automobiles, pour autoriser le titulaire de la carte/clé à procéder au nettoyage de son véhicule, et/ou au contrôle de la pression des pneus, et/ou au chargement d'unités de crédit sur sa carte/clé, et/ou au paramétrage du fonctionnement d'au moins une station.

## Patentansprüche

1. Vorrichtung zur Übertragung von Informationen wenigstens bezüglich einer Dienstleistung, die von einer Struktur angeboten wird, in der die Vorrichtung installiert ist, die einen Leser enthält, der dazu vorgesehen ist, mit einem Informationsträger zusammenzuarbeiten, der mit Mitteln zum Speichern von Informationen bezüglich der Dienstleistungen und insbesondere bezüglich eines die Bezahlung der Dienstleistungen zulassenden Kredits, den der Eigentümer des Informationsträgers besitzt, versehen ist, **dadurch gekennzeichnet, daß** der Informationsträger vom Kreditkartentyp oder alternativ vom Schlüsseltyp ist und daß der Leser eine einzige Zugangsöffnung (O) enthält, der das Einschieben der Karte/des Schlüssels (20) zuläßt und in ein komplexes Volumen (1, 2) mündet, das die Karte oder den Schlüssel (20) aufnimmt und ihre Führung beim Einschieben gewährleistet, wobei elastische Mittel (8, 9, 10) zum Halten der Karte/des Schlüssels (20), wenn sie zur Informationsübertragung in den Aufnahmesitz (1, 2) eingeschoben wird, vorgesehen sind, um eine relative Blockierung zwischen der Karte/dem Schlüssel (20) und dem Leser zu gewährleisten, ohne ihre manuelle Entnahme durch einfaches Anziehen zu behindern.

2. Informationsübertragungsvorrichtung nach Anspruch 1, dadurch gekennzeichnet, daß die Einschuböffnung (O) die Form eines T besitzt, dessen oberer Balken der Einschubzone der Karte entspricht, während die Mittelzone mit vertikalem Verlauf dem Einschubraum des Schlüssels (20) entspricht.

3. Informationsübertragungsvorrichtung nach Anspruch 2, dadurch gekennzeichnet, daß das komplexe Volumen (1, 2) einen im wesentlichen T-förmigen transversalen Querschnitt besitzt, wobei die obere Wand wenigstens einen elastischen Haken (8) aufweist, der in bezug auf die obere Wand einen Winkel bildet, derart, daß sein freies Ende in das komplexe Volumen (1, 2) eindringt.

4. Informationsübertragungsvorrichtung nach dem vorangehenden Anspruch, dadurch gekennzeichnet, daß der Haken (8) mit Reliefs (9, 10) versehen ist, die in den Innenraum des komplexen Volumens (1, 2) gerichtet sind.

5. Informationsübertragungsvorrichtung nach einem der Ansprüche 3 und 4, dadurch gekennzeichnet, daß das komplexe Volumen (1, 2) nur einen oberen elastischen Haken aufweist, der auf die obere Wand zentriert ist und longitudinal in bezug auf die Einschubrichtung der Karte/des Schlüssels (20) orientiert ist und dessen freies Ende sich gegenüber der Einschuböffnung (O) befindet.

6. Informationsübertragungsvorrichtung nach einem der Ansprüche 3 bis 5, dadurch gekennzeichnet, daß der obere elastische Haken (8) wenigstens einen Höcker (9, 10) mit dreieckigem Querschnitt aufweist, der in bezug auf den Haken (8) transversal orientiert ist und dessen Spitze abgerundet ist.

7. Informationsübertragungsvorrichtung nach einem der Ansprüche 5 und 6, dadurch gekennzeichnet, daß der obere Haken (8) drei dreieckige Höcker (9, 10) aufweist, wobei der am nächsten an der Einschuböffnung befindliche die gesamte Breite des oberen elastischen Hakens (8) einnimmt, während die beiden anderen sich transversal symmetrisch beiderseits der mittigen Längsachse des oberen elastischen Hakens (8) befinden.

8. Informationsübertragungsvorrichtung nach irgendeinem der Ansprüche 2 bis 7, dadurch gekennzeichnet, daß die untere Wand (7) des komplexen Volumens (1, 2) zwei seitliche Rampen (3) aufweist, die zur unteren Wand (5) des der Karte zugewiesenen Volumens (1) parallel sind und dazu bestimmt sind, den Schlüssel (20) zu unterstützen/führen, und mit einer Endschulter (4) versehen sind, die sich in einem Abstand von der Einschuböffnung (O) befindet und als mechanischer Anschlag für den Schlüssel (20) dient.

9. Informationsübertragungsvorrichtung nach dem vorangehenden Anspruch, dadurch gekennzeichnet, daß die untere Wand (7) des komplexen Volumens (1, 2) geneigt ist, wobei die Neigung an einer vertikalen Wand endet, die sich in der Nähe des freien Endes des oberen elastischen Hakens (8) befindet und als mechanischer Anschlag für die Karte dient, die sich dann in der Informationsübertragungsposition befindet und mit einem Druck beaufschlagt wird, der von den dreieckigen Höckern (9, 10) ausgeübt wird.

10. Informationsübertragungsvorrichtung nach einem der Ansprüche 8, 9, dadurch gekennzeichnet, daß der Schlüssel (20) in den mittigen Raum (2) mit vertikalem Verlauf des komplexen Volumens (1, 2) auf den seitlichen Rampen (3) und in Kontakt mit den über diese Rampen (3) überstehenden seitlichen Wänden eingeführt wird, wobei die obere Führung durch den dreieckigen Höcker (9), der sich am nähesten in der Einschuböffnung (O) befindet, gewährleistet ist.

11. Informationsübertragungsvorrichtung nach dem vorangehenden Anspruch, dadurch gekennzeichnet, daß der Schlüssel (20) wenigstens ein hohles Relief (14, 14') aufweist, das sich an den dreieckigen Höcker (9) anpaßt, wenn der Schlüssel (20) in seinem Aufnahmesitz (2) in Anschlag ist.

12. Informationsübertragungsvorrichtung nach dem vorangehenden Anspruch, dadurch gekennzeichnet, daß der Schlüssel (20) wenigstens in seinem Abschnitt (13), der dazu vorgesehen ist, im Leser aufgenommen zu werden, eine Symmetrieebene aufweist, derart, daß seine Vorderseite und seine Rückseite vertauschbar sind.

13. Informationsübertragungsvorrichtung nach einem der vorangehenden Ansprüche, dadurch gekennzeichnet, daß der Leser auf seiner Fläche, die jener gegenüberliegt, die die Einschuböffnung für die Karte/den Schlüssel (20) aufweist, wenigstens einen Aufnahmesitz (A) für die Installation einer Antenne für die Datenübertragung zwischen der Karte/dem Schlüssel (20) und einer elektronischen Verarbeitungszentraleinheit enthält.

14. Anwendung der Informationsübertragungsvorrichtung nach den vorangehenden Ansprüchen auf automatisierte Stationen, insbesondere auf Kraftfahrzeug-Waschanlagen, um dem Eigentümer der Karte/des Schlüssels zu ermöglichen, die Reinigung seines Fahrzeugs vorzunehmen, und/oder auf die Steuerung des Reifendrucks und/oder auf das Laden von Krediteinheiten in der Karte/dem Schlüssel und/oder auf die Parametrisierung des Betriebs wenigstens einer Station.

## Claims

1. Device for transferring data relating to at least one service offered by a structure in which the said device is installed, which comprises a reader designed to cooperate with a data carrier provided with means for storing data concerning to the said services and in particular relating to credit possessed by the holder of the said data carrier authorizing payment for services, **characterized in that** the said data carrier is of the credit card type or alternatively of the key type and in that the reader includes a single access orifice (O) enabling the card/key (20) to be inserted, opening onto a complex volume (1, 2) which can house the card or key (20) and ensuring that they are guided during insertion, elastic means (8, 9, 10) for holding the card/key (20) when it is inserted in the housing (1, 2) with a view to transferring data being provided to ensure relative immobilisation between the card/key (20) and the reader, without opposing their removal manually simply by pulling.

2. Device for transferring data according to claim 1, characterized in that the insertion orifice (O) is in the shape of a T of which the upper bar corresponds to the zone for inserting the card whereas the central zone with a vertical appearance corresponds to the space for inserting the key (20).

3. Device for transferring data according to claim 2, characterized in that the complex volume (1,2) has a transverse section substantially in the shape of a T, the upper wall including at least one elastic pad (8) presenting, with respect to the said upper wall, an angle such that its free end penetrates into the said complex volume (1,2).

4. Device for transferring data according to the preceding claim, characterized in that the said pad (8) is provided with portions in relief (9,10) directed towards the inside of the said complex volume (1,2).

5. Device for transferring data according to one of claims 3 and 4, characterized in that the complex volume (1,2) has only one upper elastic pad (8) centred on the upper wall, directed longitudinally with respect to the direction of insertion of the card/key (20) and of which the free end is situated opposite the insertion orifice (O)

6. Device for transferring data according to one of claims 3 to 5, characterized in that the upper elastic pad (8) includes at least one projection (9,10) with a triangular cross section directed transversely with respect to the pad (8) and of which the summit is rounded.

7. Device for transferring data according to one of claims 5 and 6, characterized in that the said upper pad (8) includes three triangular projections (9,10) the one closest to the insertion orifice occupying all the width of the upper elastic pad (8), the other two being localized over the same transverse axis symmetrically either side of the central longitudinal axis of the said upper elastic pad (8) .

8. Device for transferring data according to any one of claims 2 to 7, characterized in that the lower wall (7) of the complex volume (1,2) includes two lateral ramps (3) parallel to the lower wall (5) of the volume (1) allotted to the card, designed to support/guide the key (20), and provided with an end shoulder (4) situated at a distance from the said insertion orifice (O) and acting as a mechanical stop for the key (20).

9. Device for transferring data according to the preceding claim, characterized in that the lower wall (7) of the complex volume (1,2) is sloped, the said slope ending in a vertical wall situated close to the free end of the upper elastic pad (8) acting as a mechanical stop for the card, which is then situated in a position for transferring data and being subjected to pressure exerted by the triangular projections (9,10).

10. Device for transferring data according to one of claims 8 and 9, characterized in that the key (20) is inserted into the central space (2) with a vertical appearance of the complex volume (1,2) on the lateral ramps (3) and in contact with the lateral walls surmounting the said ramps (3), upper guiding being ensured by the triangular projection (9) closest to the insertion orifice (O).

11. Device for transferring data according to the preceding claim, characterized in that the key (20) includes at least one hollowed portion in relief (14,14') matching the said triangular projection (9) when it is in abutment in its housing (2).

12. Device for transferring data according to the preceding claim, characterized in that the key (20) has a symmetrical plane, at least in its portion (13) designed to be housed in the reader, so that its recto and verso sides are indistinguishable.

13. Device for transferring data according to any one of the preceding claims, characterized in that the reader includes, on its face opposite that which has the orifice for inserting the card/key (20), at least one housing (A) for installing an antenna for transmitting data between the card/key (20) and a central electronic processing unit.

14. Application of the device for transferring data according to the preceding claims to automated stations in particular for washing motor vehicles, to authorize the holder of the card/key to clean his or her vehicle, and/or to check the pressure of the tyres and/or to charge the credit units on his or her card/key and/or to parametrize the operation of at least one station.
